# EUROPEAN PATENT APPLICATION

(11) **EP 4 741 754 A1**
(43) Date of publication of application: **13.05.2026**
(21) Application number: 25833855.7
(22) Date of filing: 31.07.2025
(51) Int. Cl.: F28F 13/02, F25B 39/02, F28D 9/00

(54) **SHELL AND PLATE HEAT EXCHANGER AND REFRIGERATION DEVICE**

(30) Priority: 07.08.2024 JP 2024130655
(71) Applicant: DAIKIN INDUSTRIES, LTD., Osaka 530-0001 (JP)
(72) Inventor: NUMATA, Mitsuharu, Osaka 530-0001 JAPAN (JP); YAMAGUCHI, Masaki, Osaka 530-0001 JAPAN (JP)
(74) Representative: Hoffmann Eitle
(86) International application number: PCT/JP2025/027238
(87) International publication number: WO 2026/034350

(57) **Abstract**

A first surface (81) and a second surface (82) are joined to each other at the periphery of a first channel (33) and the periphery of a second channel (34). A third surface (83) and a fourth surface (84) are joined to each other at a peripheral portion of a second heat transfer plate (72) and a third heat transfer plate (73) and at a partitioning portion (75) located between the first channel (33) and the second channel (34). The second surface (82) includes a rough surface that is rough.

## Description

### TECHNICAL FIELD

The present disclosure relates to a shell-and-plate heat exchanger and a refrigeration apparatus.

### BACKGROUND ART

Patent Document 1 discloses a heat exchange device including a tank and a plate package provided in the internal space of the tank. The plate package includes multiple heat transfer plates (heat exchange plates) adjacent to one another. The multiple heat transfer plates form a refrigerant channel (first space) through which a refrigerant flows and a heating medium channel (second space) through which a heating medium flows. The multiple heat transfer plates are joined together by brazing, for example.

### CITATION LIST

### PATENT DOCUMENT

Patent Document 1: Japanese Unexamined Patent Publication (Japanese Translation of PCT Application) No. 2006-527835

### SUMMARY OF THE INVENTION

### TECHNICAL PROBLEM

To enhance the heat exchange efficiency of the refrigerant, there has been a demand for roughening the heat transfer surface of the refrigerant channel. Unfortunately, when multiple heat transfer plates are stacked on one another and brazed together, the roughened heat transfer surface becomes covered with a brazing material, and the heat exchange efficiency of the refrigerant cannot be improved.

An object of the present disclosure is to enhance the heat exchange efficiency of a refrigerant by roughening the heat transfer surface of a refrigerant channel.

### SOLUTION TO THE PROBLEM

A first aspect of the present disclosure includes: a shell (11) having an internal space (15); and a plate stack (30) housed in the internal space (15) and including a first heat transfer plate (71), a second heat transfer plate (72), and a third heat transfer plate (73) which are stacked and joined together in a plate thickness direction, the plate stack (30) including: a refrigerant channel (31) which is provided between a first surface (81) of the first heat transfer plate (71) and a second surface (82) of the second heat transfer plate (72) and through which a refrigerant flows; a heating medium channel (32) which is provided between a third surface (83) of the second heat transfer plate (72) and a fourth surface (84) of the third heat transfer plate (73) and through which a heating medium flows; a first channel (33) extending in a stacking direction of the second heat transfer plate (72) and the third heat transfer plate (73) and communicating with the heating medium channel (32); and a second channel (34) extending in the stacking direction and communicating with the heating medium channel (32), the first surface (81) and the second surface (82) being joined to each other at a periphery of the first channel (33) and a periphery of the second channel (34), the third surface (83) and the fourth surface (84) being joined to each other at a peripheral portion of the second heat transfer plate (72) and the third heat transfer plate (73) and at a partitioning portion (75) located between the first channel (33) and the second channel (34), the second surface (82) including a rough surface that is rough.

According to the first aspect, the first surface (81) and the second surface (82) are joined to each other at the periphery of the first channel (33) and at the periphery of the second channel (34); therefore, the rough surface of the second surface (82) is exposed to the refrigerant channels (31). This can enhance the heat exchange efficiency of the refrigerant passing through the refrigerant channels (31).

The third surface (83) and the fourth surface (84) are joined to each other at the peripheral portions of the second heat transfer plate (72) and the third heat transfer plate (73) and at the partitioning portions (75) to cause the heating medium to bypass and not to flow through the partitioning portions (75) between the first channel (33) and the second channel (34). Thus, a reduction in the heat exchange efficiency between the heating medium and the refrigerant can be reduced.

A second aspect of the present disclosure is an embodiment of the shell-and-plate heat exchanger of the first aspect. In the second aspect, the rough surface is provided in 80% or more of an area of the second surface (82).

According to the second aspect, providing a rough surface in 80% or more of the area of the second surface (82) can enhance the heat exchange efficiency of the refrigerant flowing through the refrigerant channels (31).

A third aspect of the present disclosure is an embodiment of the shell-and-plate heat exchanger of the first or second aspect. In the third aspect, the first surface (81) and the second surface (82) are joined together by brazing, and the third surface (83) and the fourth surface (84) are joined together by brazing.

According to the third aspect, the first surface (81) and the second surface (82) are joined together by brazing, and the third surface (83) and the fourth surface (84) are joined together by brazing.

A fourth aspect of the present disclosure is an embodiment of the shell-and-plate heat exchanger of the third aspect. In the fourth aspect, a reservoir (95) is provided between a brazed portion (85) at the periphery of the first channel (33), where the first surface (81) and the second surface (82) are brazed, and the refrigerant channel (31), the reservoir (95) being configured to store a brazing material (87).

According to the fourth aspect, during brazing of the first surface (81) and the second surface (82), the molten brazing material (87) is stored in the reservoir (95), thereby making it possible to reduce the likelihood of the brazing material (87) entering the refrigerant channel (31).

A fifth aspect of the present disclosure is an embodiment of the shell-and-plate heat exchanger of the fourth aspect. In the fifth aspect, the reservoir (95) is a recessed portion of at least one of the first surface (81) or the second surface (82), at a position apart from the refrigerant channel (31).

According to the fifth aspect, the reservoir (95) is obtained by forming a recess in at least one of the first surface (81) or the second surface (82) at a position apart from the refrigerant channel (31).

A sixth aspect of the present disclosure is an embodiment of the shell-and-plate heat exchanger of the fourth aspect. In the sixth aspect, the reservoir (95) is a recessed portion of at least one of the first surface (81) or the second surface (82), the reservoir (95) being recessed like a step to open toward the refrigerant channel (31).

According to the sixth aspect, at least one of the first surface (81) or the second surface (82) is recessed like a step to open toward the refrigerant channel (31), thereby forming the reservoir (95).

A seventh aspect of the present disclosure is an embodiment of the shell-and-plate heat exchanger of any one of the fourth to sixth aspects. In the seventh aspect, the reservoir (95) extends along a circumferential direction of the first channel (33) over an entire perimeter.

According to the seventh aspect, the reservoir (95) is extended along the circumferential direction of the first channel (33) over the entire perimeter, thereby making it possible to reduce the likelihood of the molten brazing material (87) entering the refrigerant channel (31).

An eighth aspect of the present disclosure is an embodiment of the shell-and-plate heat exchanger of any one of the fourth to sixth aspects. In the eighth aspect, a plurality of reservoirs (95), each being identical to the reservoir (95), are spaced apart from one another in a circumferential direction of the first channel (33).

According to the eighth aspect, multiple reservoirs (95) are spaced apart from one another in the circumferential direction of the first channel (33), thereby making it possible to increase the brazing area to ensure the joint strength while reducing the likelihood of the molten brazing material (87) entering the refrigerant channel (31).

A ninth aspect of the present disclosure is an embodiment of the shell-and-plate heat exchanger of any one of the fourth to eighth aspects. In the ninth aspect, the second surface (82) at the periphery of the first channel (33) is not provided with the rough surface.

According to the ninth aspect, the rough surface is not provided on the second surface (82) at the periphery of the first channel (33), thereby making it possible to reduce the likelihood of the molten brazing material (87) flowing toward the refrigerant channel (31) by capillary action.

A tenth aspect of the present disclosure is an embodiment of the shell-and-plate heat exchanger of the first or second aspect. In the tenth aspect, the first surface (81) and the second surface (82) are joined together by welding, and the third surface (83) and the fourth surface (84) are joined together by brazing.

According to the tenth aspect, the first surface (81) and the second surface (82) are joined together by welding, and the third surface (83) and the fourth surface (84) are joined together by welding.

An eleventh aspect of the present disclosure is an embodiment of the shell-and-plate heat exchanger of any one of the third to tenth aspects. In the eleventh aspect, a peripheral portion of the first heat transfer plate (71) has a first protrusion (91) that bulges from the first surface (81) toward the refrigerant channel (31), and the peripheral portion of the second heat transfer plate (72) has a second protrusion (92) that bulges from the second surface (82) toward the refrigerant channel (31), the second protrusion (92) being in contact with the first protrusion (91).

According to the eleventh aspect, during brazing of the third surface (83) and the fourth surface (84), the first protrusion (91) and the second protrusion (92) are brought into contact with each other while pressing the second heat transfer plate (72) and the third heat transfer plate (73) together, thereby making it possible to reduce deformation of the second heat transfer plate (72) and the third heat transfer plate (73).

A twelfth aspect of the present disclosure is an embodiment of the shell-and-plate heat exchanger of the eleventh aspect. In the twelfth aspect, contact surfaces of the first protrusion (91) and the second protrusion (92) are joined together by brazing.

According to the twelfth aspect, the contact surfaces of the first protrusion (91) and the second protrusion (92) are joined together by brazing, thereby ensuring the joint strength.

A thirteenth aspect of the present disclosure is an embodiment of the shell-and-plate heat exchanger of the eleventh aspect. In the thirteenth aspect, a reservoir (95) is provided between a brazed portion (85), where the first protrusion (91) and the second protrusion (92) are brazed together on the contact surfaces, and the refrigerant channel (31), the reservoir (95) being configured to store a brazing material (87).

According to the thirteenth aspect, during brazing of the contact surfaces of the first protrusion (91) and the second protrusion (92), the molten brazing material (87) is stored in the reservoir (95), thereby making it possible to reduce the likelihood of the brazing material (87) entering the refrigerant channel (31).

A fourteenth aspect of the present disclosure is an embodiment of the shell-and-plate heat exchanger of the thirteenth aspect. In the fourteenth aspect, the reservoir (95) is a recessed portion of the contact surface of at least one of the first protrusion (91) or the second protrusion (92), at a position apart from the refrigerant channel (31).

According to the fourteenth aspect, the reservoir (95) is obtained by forming a recess in at least one of the contact surfaces of the first protrusion (91) or the second protrusion (92) at a position apart from the refrigerant channel (31).

A fifteenth aspect of the present disclosure is an embodiment of the shell-and-plate heat exchanger of the thirteenth aspect. In the fifteenth aspect, the reservoir (95) is a recessed portion of the contact surface of at least one of the first protrusion (91) or the second protrusion (92), the reservoir (95) being recessed like a step to open toward the refrigerant channel (31).

According to the fifteenth aspect, at least one of the contact surfaces of the first protrusion (91) or the second protrusion (92) is recessed like a step to open toward the refrigerant channel (31), thereby forming the reservoir (95).

A sixteenth aspect of the present disclosure is an embodiment of the shell-and-plate heat exchanger of the first or second aspect. In the sixteenth aspect, the first surface (81) and the second surface (82) are joined together by welding, and the third surface (83) and the fourth surface (84) are joined together by welding.

According to the sixteenth aspect, the first surface (81) and the second surface (82) are joined together by welding, and the third surface (83) and the fourth surface (84) are joined together by welding.

A seventeenth aspect of the present disclosure is an embodiment of the shell-and-plate heat exchanger of the sixteenth aspect. In the seventeenth aspect, the third surface (83) and the fourth surface (84) each have a flat peripheral portion.

According to the seventeenth aspect, each of the third surface (83) and the fourth surface (84) has a flat peripheral portion; therefore, the second heat transfer plate (72) and the third heat transfer plate (73) can be welded together while the peripheral portions of the third surface (83) and the fourth surface (84) are in close contact with each other.

An eighteenth aspect of the present disclosure is directed to a refrigeration apparatus including: the shell-and-plate heat exchanger (10) of any one of the first to seventeenth aspects; and a refrigerant circuit (1a) through which a refrigerant having exchanged heat in the shell-and-plate heat exchanger (10) flows.

According to the eighteenth aspect, it is possible to provide the refrigeration apparatus including the shell-and-plate heat exchanger (10) and the refrigerant circuit (1a).

### BRIEF DESCRIPTION OF THE DRAWINGS

[FIG. 1] FIG. 1 is a refrigerant circuit diagram showing a configuration of a refrigeration apparatus according to a first embodiment.
[FIG. 2] FIG. 2 is a cross-sectional side view showing a configuration of a shell-and-plate heat exchanger.
[FIG. 3] FIG. 3 is a cross-sectional front view showing the configuration of the shell-and-plate heat exchanger.
[FIG. 4] FIG. 4 is a cross-sectional side view showing a configuration of a plate stack.
[FIG. 5] FIG. 5 is a front view showing a configuration of a heat transfer plate.
[FIG. 6] FIG. 6 is a cross-sectional view taken along line A-A shown in FIG. 5.
[FIG. 7] FIG. 7 is a cross-sectional view taken along line B-B shown in FIG. 5.
[FIG. 8] FIG. 8 corresponds to FIG. 7, illustrating a configuration of a plate stack according to a second embodiment.
[FIG. 9] FIG. 9 is a view as viewed in the direction of the arrow C in FIG. 8.
[FIG. 10] FIG. 10 corresponds to FIG. 6, illustrating a configuration of a plate stack according to a third embodiment.
[FIG. 11] FIG. 11 corresponds to FIG. 7, illustrating a configuration of the plate stack.
[FIG. 12] FIG. 12 corresponds to FIG. 6, illustrating a configuration of a plate stack according to a fourth embodiment.
[FIG. 13] FIG. 13 corresponds to FIG. 7, illustrating a configuration of the plate stack.
[FIG. 14] FIG. 14 is a front view showing a configuration of a heat transfer plate according to a fifth embodiment.
[FIG. 15] FIG. 15 is a cross-sectional view taken along line D-D shown in FIG. 14.
[FIG. 16] FIG. 16 is a cross-sectional view showing a state in which a sheet-like brazing material is inserted.
[FIG. 17] FIG. 17 is a partially enlarged front view of a configuration of a heat transfer plate according to a sixth embodiment.
[FIG. 18] FIG. 18 is a partially enlarged front view of a configuration of a heat transfer plate according to a seventh embodiment.
[FIG. 19] FIG. 19 is a cross-sectional view taken along line E-E shown in FIG. 18.
[FIG. 20] FIG. 20 is a partially enlarged front view of a configuration of a heat transfer plate according to an eighth embodiment.
[FIG. 21] FIG. 21 is a cross-sectional view taken along line F-F in FIG. 20.
[FIG. 22] FIG. 22 corresponds to FIG. 21, illustrating a configuration of heat transfer plates according to a ninth embodiment.

### DESCRIPTION OF EMBODIMENTS

### «First Embodiment»

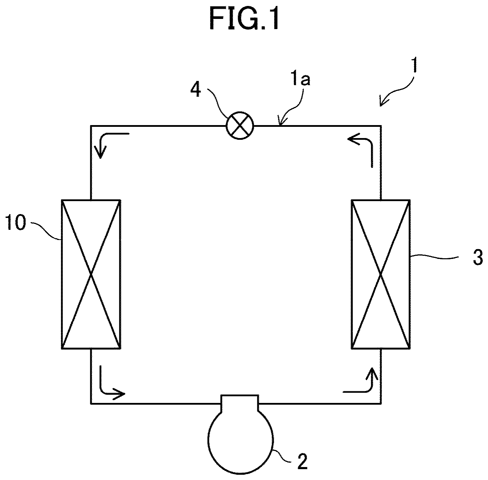

As illustrated in FIG. 1, a shell-and-plate heat exchanger (10) (hereinafter simply referred to as a "heat exchanger") is provided in a refrigeration apparatus (1). The refrigeration apparatus (1) includes a refrigerant circuit (1a) filled with a refrigerant. The refrigerant circuit (1a) includes a compressor (2), a radiator (3), a decompression mechanism (4), and the heat exchanger (10) serving as an evaporator. The decompression mechanism (4) is, for example, an expansion valve. The refrigerant circuit (1a) performs a vapor compression refrigeration cycle.

The refrigeration apparatus (1) is an air conditioner, for example. The air conditioner may be a cooling-only apparatus, a heating-only apparatus, or an air conditioner switchable between cooling and heating. In this case, the air conditioner has a switching mechanism (e.g., a four-way switching valve) configured to switch the direction of circulation of the refrigerant. The refrigeration apparatus (1) may be a water heater, a chiller unit, or a cooling apparatus configured to cool air in an internal space. The cooling apparatus cools the air in an internal space of a refrigerator, a freezer, a container, or the like.

### <Heat Exchanger>

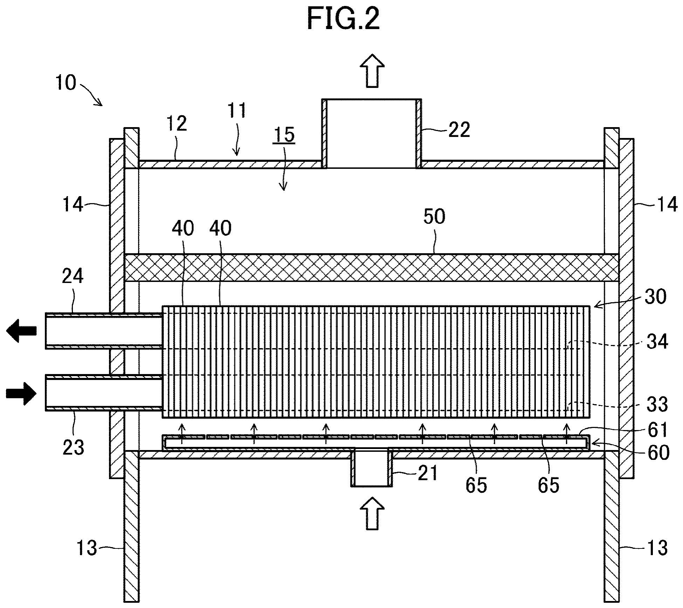

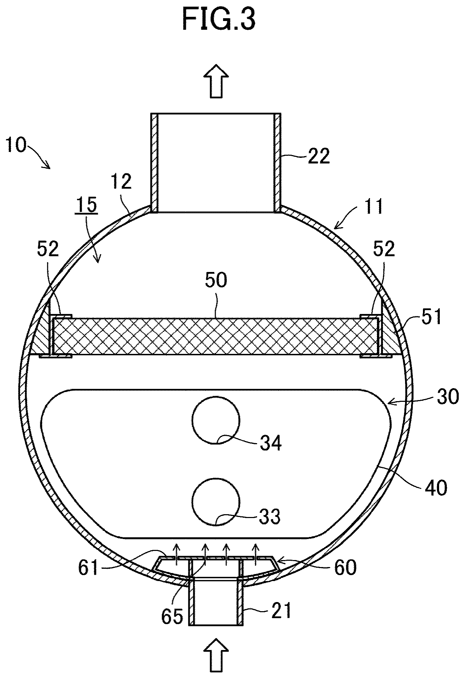

As illustrated in FIGS. 2 and 3, the heat exchanger (10) includes a shell (11) and a plate stack (30). The shell (11) has an internal space (15). The refrigerant flows into the internal space (15) of the shell (11). The plate stack (30) is housed in the internal space (15) of the shell (11). The refrigerant exchanges heat with a heating medium flowing in the plate stack (30). As can be seen, the heat exchanger (10) allows the refrigerant that has flowed into the internal space (15) of the shell (11) to evaporate, and thus, functions as an evaporator.

Here, the refrigerant used is a single component refrigerant, which is a hydrofluoroolefin (HFO) refrigerant, or a refrigerant mixture containing the HFO refrigerant as a component. Specifically, R1233zd(E), R1234ze(E), R513A, or any other suitable refrigerant is used. As the heating medium, water and brine are used, for example.

### <Shell>

The shell (11) includes a cylindrical body (12), support legs (13), and closing members (14). The cylindrical body (12) is a circular cylindrical member extending in a horizontal direction and having openings on both axial ends.

The support legs (13) are located near both respective axial ends of the cylindrical body (12). The support legs (13) each have a hole corresponding to the opening of the cylindrical body (12). The support legs (13) are attached to the cylindrical body (12) by welding, for example.

The closing members (14) close the respective openings on both ends of the cylindrical body (12). The closing members (14) are fastened to the associated support legs (13) through clamping bolts, for example.

The shell (11) has the internal space (15) defined by the cylindrical body (12), the support legs (13), and the closing members (14). The shell (11) is arranged so that its axial direction coincides with the horizontal direction. The internal space (15) stores the liquid refrigerant. The plate stack (30) is housed in the internal space (15).

The shell (11) has a refrigerant inlet (21) and a refrigerant outlet (22). The refrigerant inlet (21) is formed at the bottom of the shell (11). The refrigerant is introduced into the internal space (15) through the refrigerant inlet (21). In the example shown in FIG. 2, the refrigerant inlet (21) is formed in a lower portion of the shell (11) at a central position in the stacking direction of the plate stack (30).

The refrigerant outlet (22) is formed at the top of the shell (11). The refrigerant evaporated in the internal space (15) is emitted out of the shell (11) through the refrigerant outlet (22). The refrigerant inlet (21) and the refrigerant outlet (22) are connected to the refrigerant circuit (1a).

The shell (11) has a heating medium inlet (23) and a heating medium outlet (24). The heating medium inlet (23) and the heating medium outlet (24) are tubular members.

The heating medium inlet (23) penetrates one axial end of the shell (11). The heating medium inlet (23) is connected to a heating medium introduction path (33) of the plate stack (30). The heating medium inlet (23) supplies the heating medium to the plate stack (30). The refrigerant that has flowed into the internal space (15) of the shell (11) exchanges heat with the heating medium that has flowed into heating medium channels (32), which will be described later, of the plate stack (30).

The heating medium outlet (24) penetrates the one axial end of the shell (11) above the heating medium inlet (23). The heating medium outlet (24) is connected to a heating medium emission path (34) of the plate stack (30). The heating medium outlet (24) emits the heating medium out of the plate stack (30). The heating medium inlet (23) may be located above the heating medium outlet (24).

A partitioning member (60) is located below the plate stack (30). The partitioning member (60) includes a partition plate (61). The partition plate (61) serves as a partition between the plate stack (30) and the refrigerant inlet (21). The partition plate (61) extends in the stacking direction of the plate stack (30) along a lower surface of the plate stack (30).

The partition plate (61) has a plurality of communication holes (65). The refrigerant that has flowed in through the refrigerant inlet (21) flows in the stacking direction of heat transfer plates (40) along the partition plate (61), and is discharged from the plurality of communication holes (65) toward the plate stack (30).

A mesh member (50) is located above the plate stack (30) and below the refrigerant outlet (22). The mesh member (50) collects droplets contained in the refrigerant that has passed through refrigerant channels (31) and flowed out of an upper surface of the plate stack (30). The mesh member (50) is in a thick plate shape made of a stack of metal meshes, for example. The refrigerant can pass through the mesh member (50) in the thickness direction. The mesh member (50) is supported by supports (52) (see FIG. 3). The supports (52) are fixed to the inner surface of the shell (11).

### <Plate Stack>

The plate stack (30) includes a plurality of heat transfer plates (40) stacked and joined together in a plate thickness direction. The plate stack (30) is housed in the internal space (15) of the shell (11) so that the stacking direction of the heat transfer plates (40) coincides with the horizontal direction. The plate stack (30) has a length of, for example, 600 mm to 1500 mm in its width direction.

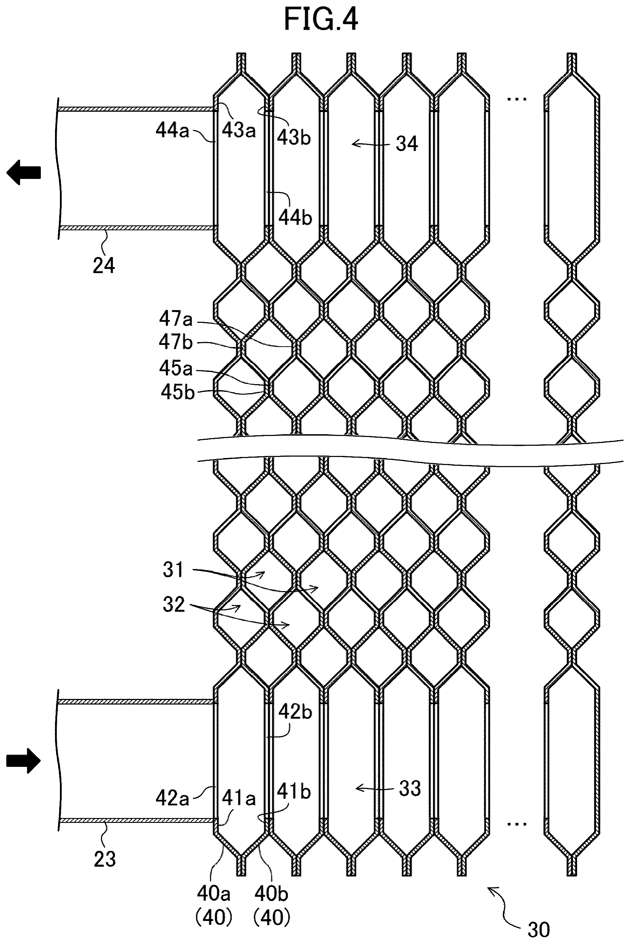

As illustrated in FIG. 4, the heat transfer plates (40) include first plates (40a) and second plates (40b). The first plates (40a) and the second plates (40b) are alternately stacked to form the plate stack (30). The second plates (40b) correspond to the first plates (40a) turned back to front.

In the following description, for each of the first plates (40a) and the second plates (40b), a surface on the left side in FIG. 4 will be referred to as a "front surface," and a surface on the right side in FIGS. 4 will be referred to as a "back surface."

### <Heating Medium Introduction Path and Heating Medium Emission Path>

Each of the first plates (40a) has an inlet protrusion (41a) and an outlet protrusion (43a). The inlet protrusion (41a) and the outlet protrusion (43a) are portions of the first plate (40a) that bulge toward the front surface.

The inlet protrusion (41a) is formed in a lower portion of the first plate (40a). A first inlet hole (42a) is formed in a center portion of the inlet protrusion (41a). The first inlet hole (42a) is a circular hole penetrating the first plate (40a) in the thickness direction.

The outlet protrusion (43a) is formed in an upper portion of the first plate (40a). A first outlet hole (44a) is formed in a center portion of the outlet protrusion (43a). The first outlet hole (44a) is a circular hole penetrating the first plate (40a) in the thickness direction.

Each of the second plates (40b) has an inlet recess (41b) and an outlet recess (43b). The inlet recess (41b) and the outlet recess (43b) are portions of the second plate (40b) bulged toward the back surface.

The inlet recess (41b) is formed in a lower portion of the second plate (40b). A second inlet hole (42b) is formed in a center portion of the inlet recess (41b). The second inlet hole (42b) is a circular hole penetrating the second plate (40b) in the thickness direction. The inlet recess (41b) is positioned to face the inlet protrusion (41a) of the first plate (40a). The second inlet hole (42b) is positioned to face the first inlet hole (42a) of the first plate (40a).

The outlet recess (43b) is formed in an upper portion of the second plate (40b). A second outlet hole (44b) is formed in a center portion of the outlet recess (43b). The second outlet hole (44b) is a circular hole penetrating the second plate (40b) in the thickness direction. The outlet recess (43b) is positioned to face the outlet protrusion (43a) of the first plate (40a). The second outlet hole (44b) is positioned to face the first outlet hole (44a) of the first plate (40a).

In the plate stack (30), each first plate (40a) and an adjacent one of the second plates (40b) on the back side of the first plate (40a) are joined together at their peripheral portions along the entire perimeter.

In the plate stack (30), the first inlet hole (42a) of each first plate (40a) overlaps the second inlet hole (42b) of an adjacent one of the second plates (40b) on the front side of the first plate (40a). The rims of the overlapping first inlet hole (42a) and second inlet hole (42b) are joined together along the entire perimeter. The first inlet hole (42a) and the second inlet hole (42b) communicate with the heating medium channels (32), which will be described later, to introduce the heating medium into the heating medium channels (32).

In the plate stack (30), the first outlet hole (44a) of each first plate (40a) overlaps the second outlet hole (44b) of an adjacent one of the second plates (40b) on the front side of the first plate (40a). The rims of the overlapping first outlet hole (44a) and second outlet hole (44b) are joined together along the entire perimeter. The first outlet hole (44a) and the second outlet hole (44b) communicate with the heating medium channels (32), which will be described later, to emit the heating medium out of the heating medium channels (32).

In the plate stack (30), the inlet protrusions (41a) and first inlet holes (42a) of the first plates (40a) and the inlet recesses (41b) and second inlet holes (42b) of the second plates (40b) form the heating medium introduction path (33).

In the plate stack (30), the outlet protrusions (43a) and first outlet holes (44a) of the first plates (40a) and the outlet recesses (43b) and second outlet holes (44b) of the second plates (40b) form the heating medium emission path (34).

The heating medium introduction path (33) is a passage extending in the stacking direction of the heat transfer plates (40) in the plate stack (30). The heating medium introduction path (33) is a passage blocked from the internal space (15) of the shell (11), and allows all the heating medium channels (32) to communicate with the heating medium inlet (23).

The heating medium emission path (34) is a passage extending in the stacking direction of the heat transfer plates (40) in the plate stack (30). The heating medium emission path (34) is a passage blocked from the internal space (15) of the shell (11), and allows all the heating medium channels (32) to communicate with the heating medium outlet (24).

### <Refrigerant Channel and Heating Medium Channel>

The plate stack (30) includes a refrigerant channel (31) and a heating medium channel (32). Multiple refrigerant channels (31) and multiple heating medium channels (32) are formed with the heat transfer plate (40) interposed therebetween. The heat transfer plate (40) separates the refrigerant channel (31) and the heating medium channel (32) from each other. Each of the first plate (40a) and the second plate (40b) includes repetition of long and narrow ridges and grooves.

Each first plate (40a) includes first front-side protrusions (45a) and first back-side protrusions (47a) alternately arranged. The first front-side protrusions (45a) bulge toward the front side of the first plate (40a). The first back-side protrusions (47a) bulge toward the back side of the first plate (40a).

Each second plate (40b) includes second front-side protrusions (47b) and second back-side protrusions (45b) alternately arranged. The second front-side protrusions (47b) bulge toward the front side of the second plate (40b). The second back-side protrusions (45b) bulge toward the back side of the second plate (40b).

Each of the refrigerant channels (31) is a channel sandwiched between the front surface of the first plate (40a) and the back surface of the second plate (40b). The refrigerant channel (31) is a channel that communicates with the internal space (15) of the shell (11) and allows the refrigerant to flow therethrough. Specifically, the refrigerant channels (31) include channels each formed between the front surface of the first back-side protrusion (47a) and the back surface of the second front-side protrusion (47b).

Each of the heating medium channels (32) is a channel sandwiched between the back surface of the first plate (40a) and the front surface of the second plate (40b). The heating medium channel (32) is a channel blocked from the internal space (15) of the shell (11) and allows the heating medium to flow therethrough. Specifically, the heating medium channels (32) include channels each formed between the back surface of the first front-side protrusion (45a) and the front surface of the second back-side protrusion (45b).

### <Flows of Heating Medium and Refrigerant>

Flows of the heating medium and the refrigerant in the heat exchanger (10) will be described. As illustrated in FIG. 4, the heating medium flows from the heating medium inlet (23) into the heating medium introduction path (33). The heating medium flowing through the heating medium introduction path (33) flows from the first inlet holes (42a) and the second inlet holes (42b) toward the first outlet holes (44a) and the second outlet holes (44b) through the heating medium channels (32).

Specifically, the heating medium flowing through the heating medium introduction path (33) enters the heating medium channel (32). The heating medium flows along the heating medium channel (32), and enters an adjacent heating medium channel (32) above the heating medium channel (32). In this manner, the heating medium flows upward while flowing from one end to the other of the heat transfer plate (40).

Next, the flow of the refrigerant will be described below. The refrigerant that has passed through the decompression mechanism (4) in the refrigerant circuit (1a) flows into the heat exchanger (10). The refrigerant flows into the internal space (15) of the shell (11) through the refrigerant inlet (21).

In the internal space (15) of the shell (11), a large portion of the plate stack (30) is immersed in the liquid refrigerant, and the liquid refrigerant flows into the refrigerant channels (31) of the plate stack (30). The liquid refrigerant that has flowed into the refrigerant channels (31) is in contact with the heat transfer plates (40), and absorbs heat from the heating medium flowing through the heating medium channels (32) and evaporates. The gas refrigerant generated in the refrigerant channels (31) flows upward to flow out of the refrigerant channels (31) and is blown upward from the plate stack (30).

The gas refrigerant that has passed through the plate stack (30) passes through the mesh member (50). The mesh member (50) collects the liquid refrigerant contained in the gas refrigerant. The gas refrigerant that has passed through the mesh member (50) flows out of the shell (11) through the refrigerant outlet (22).

### <Joint Structure of Heat Transfer Plates>

To enhance the heat exchange efficiency of the refrigerant, there has been a demand for roughening the heat transfer surfaces of the refrigerant channels (31). Unfortunately, when multiple heat transfer plates (40) are stacked on one another and brazed together, the roughened heat transfer surface becomes covered with a brazing material, and the heat exchange efficiency of the refrigerant cannot be improved.

To address this problem, in this embodiment, even when a rough surface that is rough is provided on the heat transfer surface of the refrigerant channel (31), the rough surface can be exposed to the refrigerant channel (31).

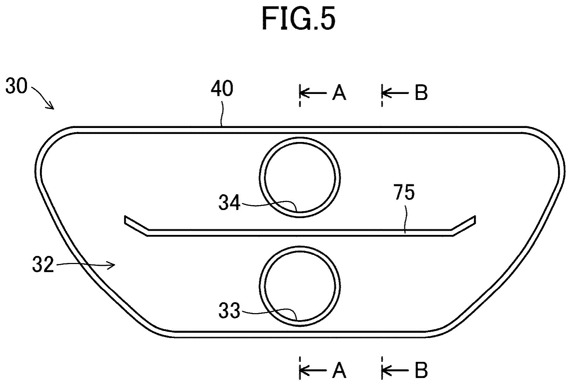

Specifically, as illustrated in FIG. 5 to FIG. 7, the plate stack (30) includes a first heat transfer plate (71), a second heat transfer plate (72), and a third heat transfer plate (73). The first heat transfer plate (71), the second heat transfer plate (72), and the third heat transfer plate (73) are stacked and joined together in the plate thickness direction.

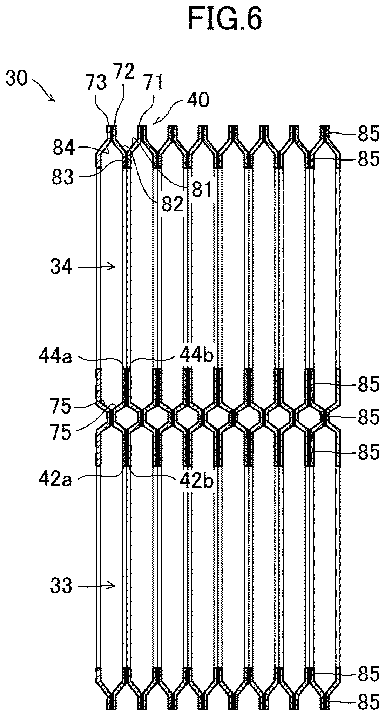

In the example shown in FIG. 6, the third heat transfer plate (40) from the left in FIG. 6 is referred to as the "first heat transfer plate (71)," the second heat transfer plate (40) from the left as the "second heat transfer plate (72)," and the first heat transfer plate (40) from the left as the "third heat transfer plate (73)." Here, the first heat transfer plate (71) and the third heat transfer plate (73) are the first plates (40a) described above. The second heat transfer plate (72) is the second plate (40b) described above.

The plate stack (30) has the refrigerant channels (31), the heating medium channels (32), the heating medium introduction path (33) serving as a first channel, and the heating medium emission path (34) serving as a second channel.

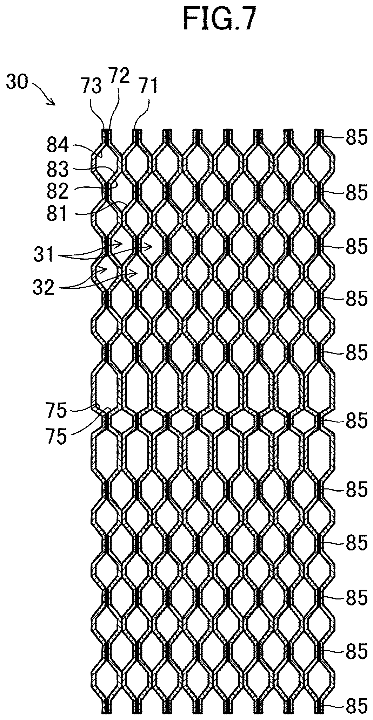

The refrigerant channels (31) are provided between a first surface (81) of the first heat transfer plate (71) and a second surface (82) of the second heat transfer plate (72). In the example shown in FIG. 7, the first surface (81) is a left surface of the first heat transfer plate (71) in FIG. 7. The second surface (82) is a right surface of the second heat transfer plate (72). The second surface (82) of the second heat transfer plate (72) includes a rough surface that is rougher than the third surface (83), which will be described later. The first surface (81) and the second surface (82) each include a rough surface that is rougher than the third surface (83) and a fourth surface (84), which will be described later.

The rough surfaces are formed by subjecting the first surface (81) and the second surface (82) to a sandblasting process, for example. The rough surfaces are provided in 80% or more of the areas of the first surface (81) and the second surface (82). The rough surface may be provided on only the first surface (81) or only the second surface (82).

The heating medium channels (32) are provided between the third surface (83) of the second heat transfer plate (72) and the fourth surface (84) of the third heat transfer plate (73). In the example shown in FIG. 7, the third surface (83) is a left surface of the second heat transfer plate (72). The fourth surface (84) is a right surface of the third heat transfer plate (73).

The heating medium introduction path (33) extends in the stacking direction of the second heat transfer plate (72) and the third heat transfer plate (73) and communicates with the heating medium channels (32). The heating medium emission path (34) extends in the stacking direction of the second heat transfer plate (72) and the third heat transfer plate (73) and communicates with the heating medium channels (32).

The third surface (83) of the second heat transfer plate (72) and the fourth surface (84) of the third heat transfer plate (73) are each provided with a partitioning portion (75). The partitioning portion (75) of the second heat transfer plate (72) bulges toward the fourth surface (84) of the third heat transfer plate (73). The partitioning portion (75) of the third heat transfer plate (73) bulges toward the third surface (83) of the second heat transfer plate (72).

The partitioning portions (75) are located between the heating medium introduction path (33) and the heating medium emission path (34). The partitioning portions (75) extend across the gap between the heating medium introduction path (33) and the heating medium emission path (34). The length of the partitioning portions (75) in the width direction is shorter than the length of each of the second heat transfer plate (72) and the third heat transfer plate (73) in the width direction. The heating medium that has flowed through the heating medium introduction path (33) into the heating medium channels (32) branches off and flows along the lower edges of the partitioning portions (75) toward both sides in the width direction. Thereafter, the heating medium flows through the gap between the peripheral portions of the second heat transfer plate (72) and the third heat transfer plate (73) and the gap between both end portions of the partitioning portions (75) in the width direction, toward the heating medium emission path (34).

As illustrated in FIG. 6, the first surface (81) and the second surface (82) are joined to each other at the periphery of the heating medium introduction path (33) and the periphery of the heating medium emission path (34). More specifically, the first surface (81) and the second surface (82) are joined to each other at the rims of the first inlet hole (42a) and the second inlet hole (42b) that form the heating medium introduction path (33) and at the rims of the first outlet hole (44a) and the second outlet hole (44b) that form the heating medium emission path (34). The first surface (81) and the second surface (82) are joined together by brazing. In FIG. 6, brazed portions (85) that have been brazed are represented by black-filled rectangles.

As illustrated in FIG. 7, the third surface (83) and the fourth surface (84) are joined to each other at the peripheral portions of the second heat transfer plate (72) and the third heat transfer plate (73) and at the partitioning portions (75). The third surface (83) and the fourth surface (84) are joined together by brazing. In FIG. 7, brazed portions (85) that have been brazed are represented by black-filled rectangles.

### <Method For Manufacturing Plate Stack>

A method for manufacturing a plate stack (30) will be described below. The first surface (81) of the first heat transfer plate (71) and the second surface (82) of the second heat transfer plate (72) are subjected to a sandblasting process to roughen the first surface (81) and the second surface (82). Rough surfaces are formed on the first surface (81) and the second surface (82) in this way. The rough surfaces are provided in 80% or more of the areas of the first surface (81) and the second surface (82).

The third surface (83) of the second heat transfer plate (72) and the fourth surface (84) of the third heat transfer plate (73) are superposed in the plate thickness direction, and peripheral portions of the second heat transfer plate (72) and the third heat transfer plate (73) as well as the partitioning portions (75) are brazed together. In this manner, the heating medium channels (32) are formed between the third surface (83) of the second heat transfer plate (72) and the fourth surface (84) of the third heat transfer plate (73).

The first surface (81) of the first heat transfer plate (71) and the second surface (82) of the second heat transfer plate (72) are superposed in the plate thickness direction, and the periphery of the heating medium introduction path (33) and the periphery of the heating medium emission path (34) are brazed together. In this manner, the refrigerant channels (31) are formed between the first surface (81) of the first heat transfer plate (71) and the second surface (82) of the second heat transfer plate (72).

Here, portions except the periphery of the heating medium introduction path (33) and the periphery of the heating medium emission path (34) are not brazed. It is thus possible to prevent the rough surfaces of the first surface (81) and the second surface (82) from being covered with the brazing material.

### -Advantages of First Embodiment-

According to this embodiment, the first surface (81) and the second surface (82) are joined to each other at the periphery of the first channel (33) and at the periphery of the second channel (34); therefore, the rough surface of the second surface (82) is exposed to the refrigerant channels (31). This can enhance the heat exchange efficiency of the refrigerant passing through the refrigerant channels (31).

The third surface (83) and the fourth surface (84) are joined to each other at the peripheral portions of the second heat transfer plate (72) and the third heat transfer plate (73) and at the partitioning portions (75) to cause the heating medium to bypass and not to flow through the partitioning portions (75) between the first channel (33) and the second channel (34). Thus, a reduction in the heat exchange efficiency between the heating medium and the refrigerant can be reduced.

According to this embodiment, providing a rough surface in 80% or more of the area of the second surface (82) can enhance the heat exchange efficiency of the refrigerant flowing through the refrigerant channels (31).

According to this embodiment, the first surface (81) and the second surface (82) are joined together by brazing, and the third surface (83) and the fourth surface (84) are joined together by brazing.

According to this embodiment, it is possible to provide the refrigeration apparatus (1) including the shell-and-plate heat exchanger (10) and the refrigerant circuit (1a).

### «Second Embodiment»

In the following description, the same reference characters designate the same components as those of the first embodiment, and the description is focused only on the difference.

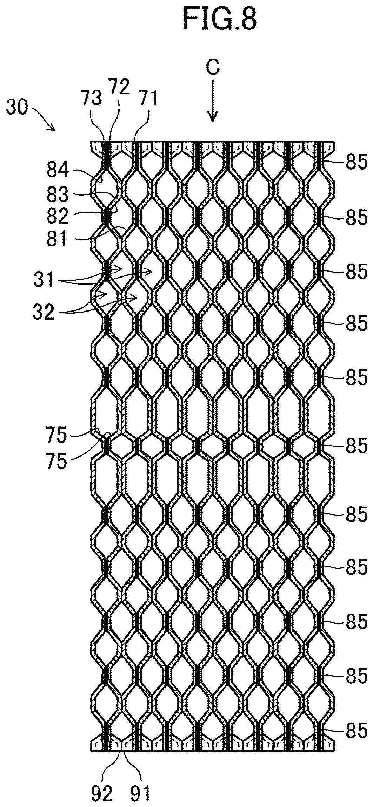

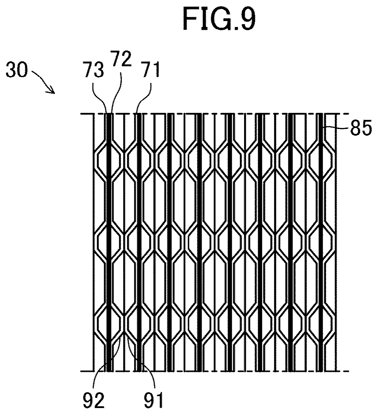

As illustrated in FIGS. 8 and 9, a peripheral portion of the first heat transfer plate (71) is provided with a first protrusion (91). The first protrusion (91) bulges from the first surface (81) toward the refrigerant channel (31).

A peripheral portion of the second heat transfer plate (72) is provided with a second protrusion (92). The second protrusion (92) bulges from the second surface (82) toward the refrigerant channel (31) and is in contact with the first protrusion (91).

The third surface (83) and the fourth surface (84) are joined to each other at peripheral portions of the second heat transfer plate (72) and the third heat transfer plate (73) and at the partitioning portions (75). The third surface (83) and the fourth surface (84) are joined together by brazing.

Here, in order to braze the second heat transfer plate (72) and the third heat transfer plate (73), the first heat transfer plate (71), the second heat transfer plate (72), and the third heat transfer plate (73) need to be stacked in the plate thickness direction as illustrated in FIG. 9 and pressed from both sides of the plate thickness direction.

In this embodiment, the first protrusion (91) and the second protrusion (92) are in contact with each other when the first heat transfer plate (71), the second heat transfer plate (72), and the third heat transfer plate (73) are stacked in the plate thickness direction. Thus, during a brazing operation, the first protrusion (91) and the second protrusion (92) function as spacers, thereby making it possible to reduce deformation of the peripheral portions of the second heat transfer plate (72) and the third heat transfer plate (73) in directions away from each other. This enables appropriate brazing of the peripheral portions of the second heat transfer plate (72) and the third heat transfer plate (73).

### -Advantages of Second Embodiment-

According to this embodiment, during brazing of the third surface (83) and the fourth surface (84), the first protrusion (91) and the second protrusion (92) are brought into contact with each other while pressing the second heat transfer plate (72) and the third heat transfer plate (73) together, thereby making it possible to reduce deformation of the second heat transfer plate (72) and the third heat transfer plate (73).

### «Third Embodiment»

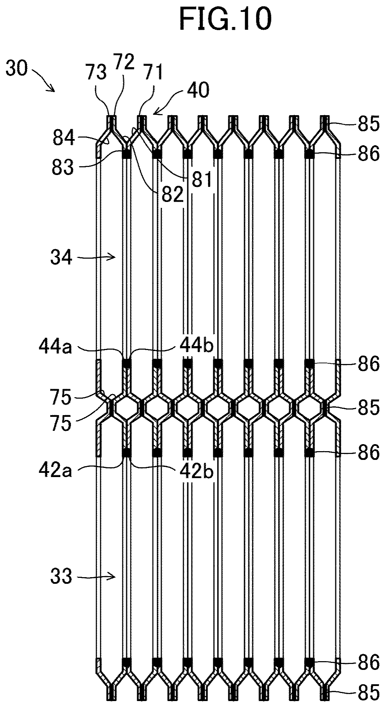

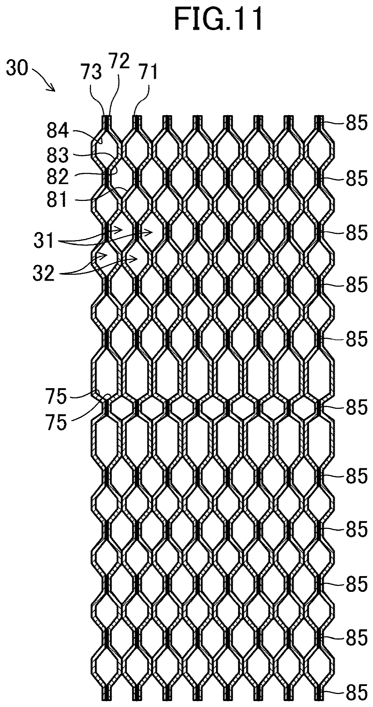

As illustrated in FIG. 10 and FIG. 11, the first surface (81) and the second surface (82) are joined to each other at the periphery of the heating medium introduction path (33) and at the periphery of the heating medium emission path (34). The first surface (81) and the second surface (82) are joined together by welding. The first surface (81) and the second surface (82) are welded together by, for example, laser welding. In FIG. 10, welded portions (86) that have been welded are represented by black-filled circles.

As illustrated in FIG. 11, the third surface (83) and the fourth surface (84) are joined to each other at the peripheral portions of the second heat transfer plate (72) and the third heat transfer plate (73) and at the partitioning portions (75). The third surface (83) and the fourth surface (84) are joined together by brazing. In FIG. 11, brazed portions (85) that have been brazed are represented by black-filled rectangles.

### -Advantages of Third Embodiment-

According to this embodiment, the first surface (81) and the second surface (82) are joined together by welding, and the third surface (83) and the fourth surface (84) are joined together by welding.

### «Fourth Embodiment»

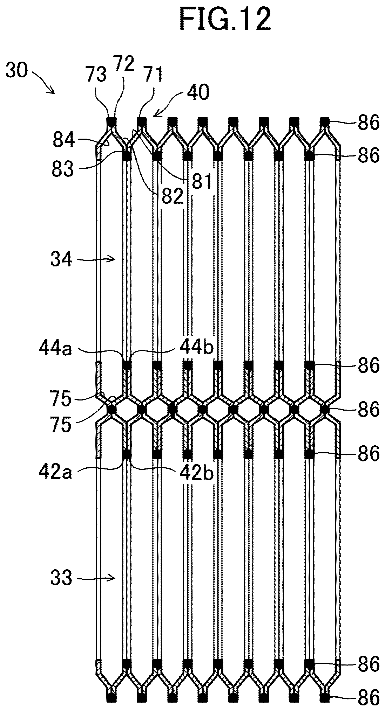

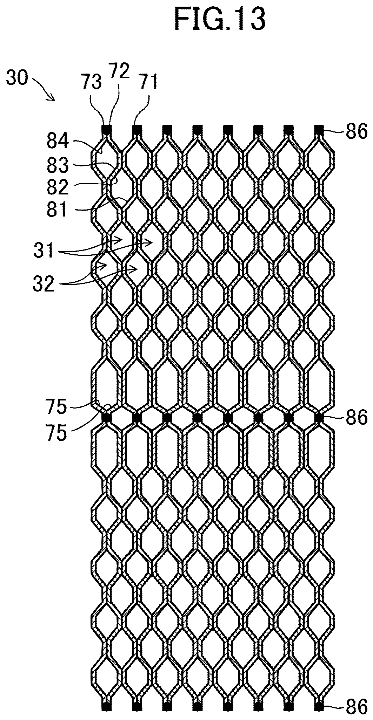

As illustrated in FIG. 12 and FIG. 13, the first surface (81) and the second surface (82) are joined to each other at the periphery of the heating medium introduction path (33) and at the periphery of the heating medium emission path (34). The first surface (81) and the second surface (82) are joined together by welding. The first surface (81) and the second surface (82) are welded together by, for example, laser welding. In FIG. 12, welded portions (86) that have been welded are represented by black-filled circles.

As illustrated in FIG. 13, the third surface (83) and the fourth surface (84) are joined to each other at the peripheral portions of the second heat transfer plate (72) and the third heat transfer plate (73) and at the partitioning portions (75). The third surface (83) and the fourth surface (84) each have a flat peripheral portion. The third surface (83) and the fourth surface (84) are joined together by welding. The third surface (83) and the fourth surface (84) are welded together by, for example, laser welding. In FIG. 13, welded portions (86) that have been welded are represented by black-filled circles.

### -Advantages of Fourth Embodiment-

According to this embodiment, the first surface (81) and the second surface (82) are joined together by welding, and the third surface (83) and the fourth surface (84) are joined together by welding.

According to this embodiment, each of the third surface (83) and the fourth surface (84) has a flat peripheral portion; therefore, the second heat transfer plate (72) and the third heat transfer plate (73) can be welded together while the peripheral portions of the third surface (83) and the fourth surface (84) are in close contact with each other.

### «Fifth Embodiment»

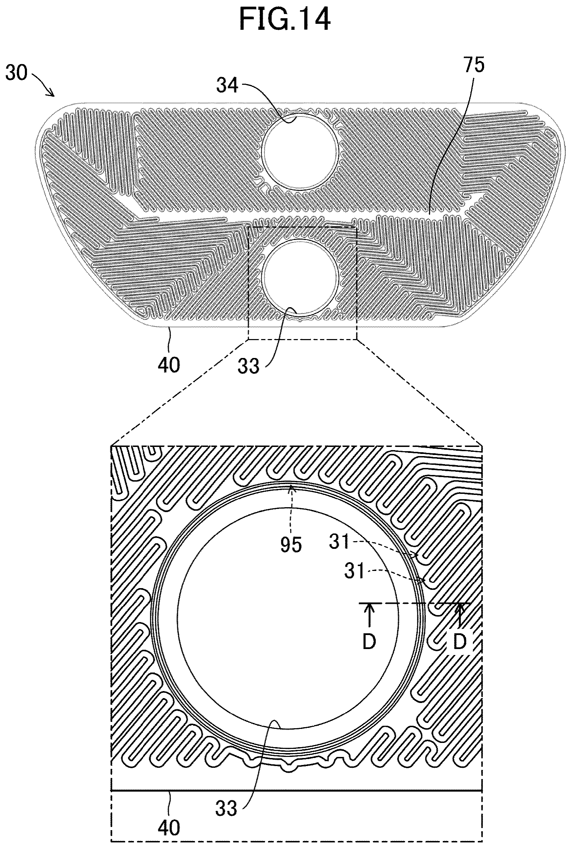

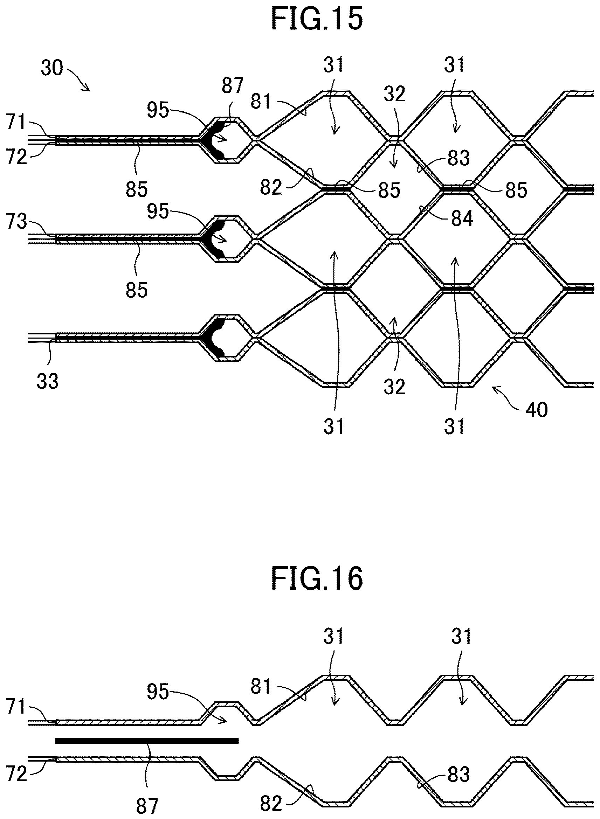

As illustrated in FIG. 14 and FIG. 15, the plate stack (30) includes a first heat transfer plate (71), a second heat transfer plate (72), and a third heat transfer plate (73). The first heat transfer plate (71), the second heat transfer plate (72), and the third heat transfer plate (73) are stacked and joined together in the plate thickness direction.

In the example shown in FIG. 15, the first heat transfer plate (40) from the top in FIG. 15 is referred to as the "first heat transfer plate (71)," the second heat transfer plate (40) from the top as the "second heat transfer plate (72)," and the third heat transfer plate (40) from the top as the "third heat transfer plate (73)."

The plate stack (30) has the refrigerant channels (31), the heating medium channels (32), the heating medium introduction path (33) serving as a first channel, and the heating medium emission path (34) serving as a second channel. The refrigerant channels (31) are provided between a first surface (81) of the first heat transfer plate (71) and a second surface (82) of the second heat transfer plate (72). The heating medium channels (32) are provided between a third surface (83) of the second heat transfer plate (72) and a fourth surface (84) of the third heat transfer plate (73).

The first surface (81) and the second surface (82) are joined to each other at the periphery of the heating medium introduction path (33) and the periphery of the heating medium emission path (34). The first surface (81) and the second surface (82) are joined together by brazing. In FIG. 15, brazed portions (85) that have been brazed are represented by black-filled rectangles.

A reservoir (95) is provided between the brazed portion (85) at the periphery of the heating medium introduction path (33), where the first surface (81) and the second surface (82) are brazed, and the refrigerant channel (31). The reservoir (95) stores a brazing material (87).

The reservoir (95) is a recessed portion of at least one of the first surface (81) or the second surface (82), at a position apart from the refrigerant channel (31). In the example shown in FIG. 15, both the first surface (81) and the second surface (82) are recessed to form the reservoir (95). The reservoir (95) extends along the circumferential direction of the heating medium introduction path (33) over the entire perimeter (see FIG. 14).

In the example shown in FIG. 15, the refrigerant channel (31) has a height of 1.0 mm to 2.0 mm, for example. The size of the reservoir (95) is smaller than that of the refrigerant channel (31). For example, the height of the reservoir (95) may be half or less of the height of the refrigerant channel (31). Specifically, if the height of the refrigerant channel (31) is 1.0 mm, the height of the reservoir (95) may be 0.5 mm or less.

In order to braze the first surface (81) and the second surface (82) at the periphery of the heating medium introduction path (33), the first surface (81) of the first heat transfer plate (71) and the second surface (82) of the second heat transfer plate (72) are superposed in the plate thickness direction, and the sheet-like brazing material (87) is inserted between these surfaces (see FIG. 16). The outer peripheral end of the brazing material (87) is located in the reservoir (95).

When the first surface (81) and the second surface (82) are brazed in this state, the molten brazing material (87) is stored in the reservoir (95) (see FIG. 15). Accordingly, it is possible to reduce the likelihood of the molten brazing material (87) entering the refrigerant channel (31). The second surface (82) includes a rough surface, and the rough surface is exposed to the refrigerant channel (31). If the molten brazing material (87) enters the refrigerant channel (31), the brazing material (87) may cover the rough surface, which may hinder the improvement in the heat exchange efficiency by the rough surface. Providing the reservoir (95) further enhances the heat exchange efficiency by the rough surface exposed to the refrigerant channel (31). The heat exchange efficiency can be further enhanced also in a case where the first surface (81) and the second surface (82) include rough surfaces.

It is preferable that the first surface (81) and the second surface (82) at the periphery of the heating medium introduction path (33) are not provided with a rough surface. Specifically, when forming the rough surface, the sandblasting process may be omitted for the first surface (81) and the second surface (82) at the periphery of the heating medium introduction path (33). The rough surface may be provided only on the second surface (82).

In the example shown in FIG. 15, a configuration including the reservoir (95) between the first surface (81) and the second surface (82) at the periphery of the heating medium introduction path (33) has been described. For the heating medium emission path (34) as well, a reservoir (95) may be provided between the first surface (81) and the second surface (82) at the periphery of the heating medium emission path (34).

### -Advantages of Fifth Embodiment-

According to this embodiment, during brazing of the first surface (81) and the second surface (82), the molten brazing material (87) is stored in the reservoir (95), thereby making it possible to reduce the likelihood of the brazing material (87) entering the refrigerant channel (31).

According to this embodiment, the reservoir (95) is obtained by forming a recess in at least one of the first surface (81) or the second surface (82) at a position apart from the refrigerant channel (31).

According to this embodiment, the reservoir (95) is extended along the circumferential direction of the first channel (33) over the entire perimeter, thereby making it possible to reduce the likelihood of the molten brazing material (87) entering the refrigerant channel (31).

According to this embodiment, the rough surface is not provided on the second surface (82) at the periphery of the first channel (33), thereby making it possible to reduce the likelihood of the molten brazing material (87) flowing toward the refrigerant channel (31) by capillary action.

### «Sixth Embodiment»

In the following description, the same reference characters designate the same components as those of the fifth embodiment, and the description is focused only on the difference.

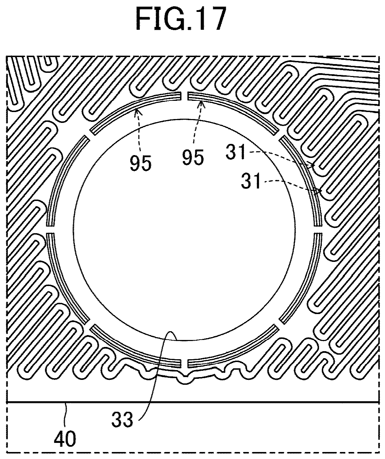

As illustrated in FIG. 17, multiple reservoirs (95) are spaced apart from one another in the circumferential direction of the first channel (33). In the example shown in FIG. 17, eight reservoirs (95) extending along the circumferential direction of the heating medium introduction path (33) are spaced apart from one another in the circumferential direction. Between the reservoirs (95) adjacent to each other in the circumferential direction, the first surface (81) and the second surface (82) are joined together by brazing.

### -Advantages of Sixth Embodiment-

According to this embodiment, multiple reservoirs (95) are spaced apart from one another in the circumferential direction of the first channel (33), thereby making it possible to increase the brazing area to ensure the joint strength while reducing the likelihood of the molten brazing material (87) entering the refrigerant channel (31).

### «Seventh Embodiment»

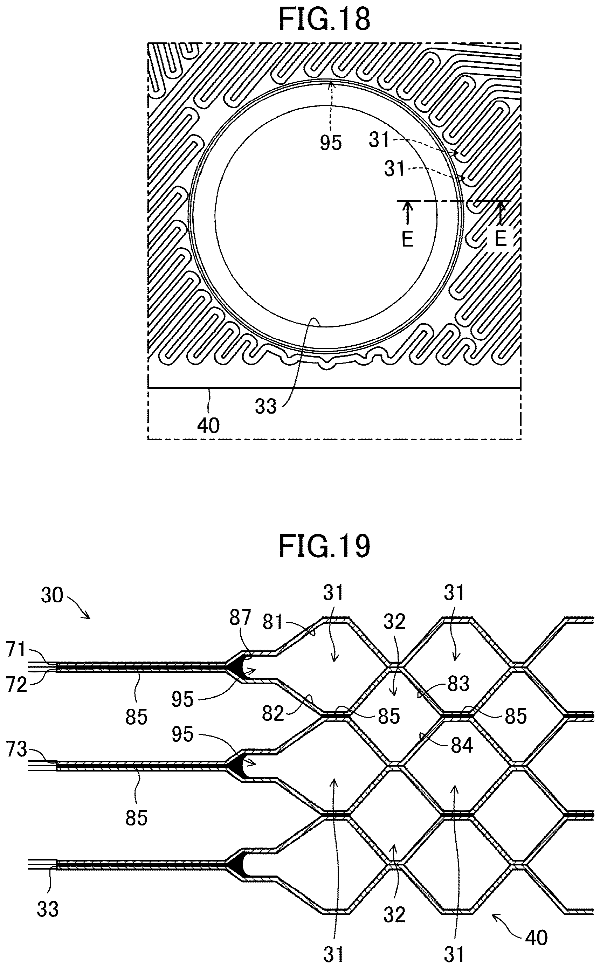

As illustrated in FIG. 18 and FIG. 19, the first surface (81) of the first heat transfer plate (71) and the second surface (82) of the second heat transfer plate (72) are joined to each other at the periphery of the heating medium introduction path (33). The first surface (81) and the second surface (82) are joined together by brazing.

A reservoir (95) is provided between the brazed portion (85) at the periphery of the heating medium introduction path (33), where the first surface (81) and the second surface (82) are brazed, and the refrigerant channel (31). The reservoir (95) stores a brazing material (87).

The reservoir (95) is a recessed portion of at least one of the first surface (81) or the second surface (82), recessed like a step to open toward the refrigerant channel (31). In the example shown in FIG. 19, both the first surface (81) and the second surface (82) are recessed like a step to form the reservoir (95).

The reservoir (95) extends along the circumferential direction of the heating medium introduction path (33) over the entire perimeter (see FIG. 18). A plurality of reservoirs (95) may be spaced apart from one another in the circumferential direction of the first channel (33).

When the first surface (81) and the second surface (82) are brazed, the molten brazing material (87) is stored in the reservoir (95) (see FIG. 19). Accordingly, it is possible to reduce the likelihood of the molten brazing material (87) entering the refrigerant channel (31).

In the example shown in FIG. 19, the refrigerant channel (31) has a height of 1.0 mm to 2.0 mm, for example. The size of the reservoir (95) is smaller than that of the refrigerant channel (31). For example, the height of the reservoir (95) may be half or less of the height of the refrigerant channel (31). Specifically, if the height of the refrigerant channel (31) is 1.0 mm, the height of the reservoir (95) may be 0.5 mm or less.

### -Advantages of Seventh Embodiment-

According to this embodiment, at least one of the first surface (81) or the second surface (82) is recessed like a step to open toward the refrigerant channel (31), thereby forming the reservoir (95).

### «Eighth Embodiment»

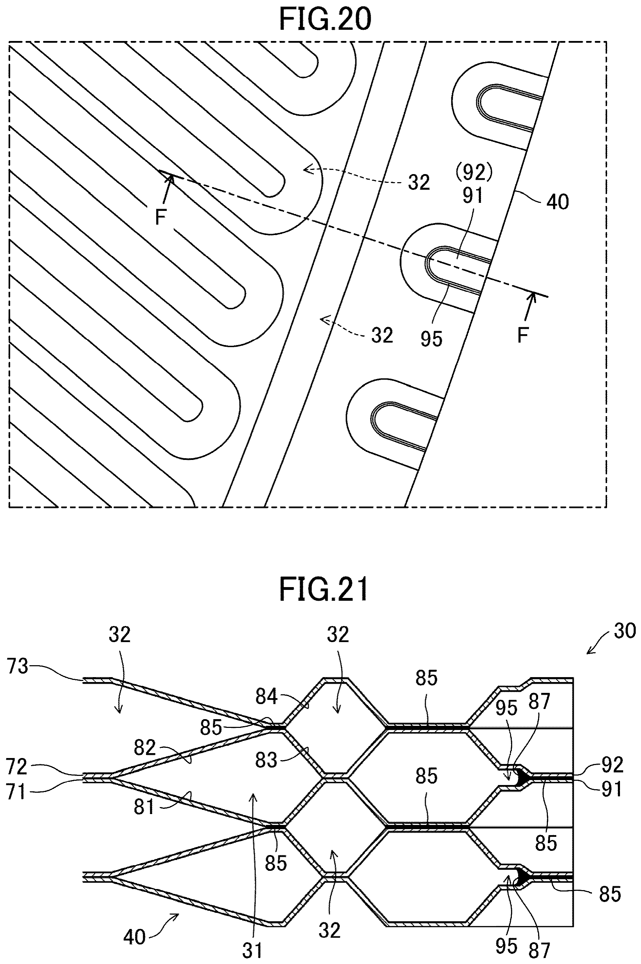

As illustrated in FIG. 20 and FIG. 21, the plate stack (30) includes a first heat transfer plate (71), a second heat transfer plate (72), and a third heat transfer plate (73). The first heat transfer plate (71), the second heat transfer plate (72), and the third heat transfer plate (73) are stacked and joined together in the plate thickness direction.

In the example shown in FIG. 21, the third heat transfer plate (40) from the top in FIG. 21 is referred to as the "first heat transfer plate (71)," the second heat transfer plate (40) from the top as the "second heat transfer plate (72)," and the first heat transfer plate (40) from the top as the "third heat transfer plate (73)."

As illustrated in FIG. 21, a peripheral portion of the first heat transfer plate (71) is provided with a first protrusion (91). The first protrusion (91) bulges from the first surface (81) toward the refrigerant channel (31).

A peripheral portion of the second heat transfer plate (72) is provided with a second protrusion (92). The second protrusion (92) bulges from the second surface (82) toward the refrigerant channel (31).

The first protrusion (91) of the first heat transfer plate (71) is in contact with the second protrusion (92) of the second heat transfer plate (72). The contact surfaces of the first protrusion (91) and the second protrusion (92) are joined together by brazing.

A reservoir (95) is provided between the brazed portion (85), where the first protrusion (91) and the second protrusion (92) are brazed together on the contact surface, and the refrigerant channel (31). The reservoir (95) stores a brazing material (87).

The reservoir (95) is a recessed portion of the contact surface of at least one of the first protrusion (91) or the second protrusion (92), recessed like a step to open toward the refrigerant channel (31). In the example shown in FIG. 21, the contact surfaces of both the first protrusion (91) and the second protrusion (92) are recessed like a step to form the reservoir (95).

### -Advantages of Eighth Embodiment-

According to this embodiment, the first protrusion (91) and the second protrusion (92) are joined together by brazing, thereby ensuring the joint strength.

According to this embodiment, during brazing of the first protrusion (91) and the second protrusion (92), the molten brazing material (87) is stored in the reservoir (95), thereby making it possible to reduce the likelihood of the brazing material (87) entering the refrigerant channel (31).

According to this embodiment, at least one of the contact surfaces of the first protrusion (91) or the second protrusion (92) is recessed like a step to open toward the refrigerant channel (31), thereby forming the reservoir (95).

### «Ninth Embodiment»

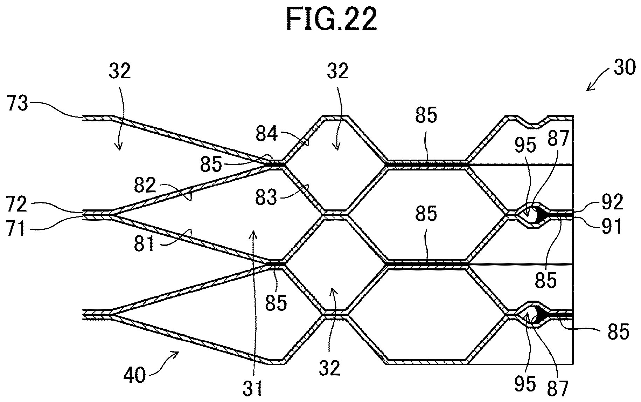

As illustrated in FIG. 22, the first protrusion (91) of the first heat transfer plate (71) is in contact with the second protrusion (92) of the second heat transfer plate (72). The contact surfaces of the first protrusion (91) and the second protrusion (92) are joined together by brazing.

A reservoir (95) is provided between the brazed portion (85), where the first protrusion (91) and the second protrusion (92) are brazed together on the contact surface, and the refrigerant channel (31). The reservoir (95) stores a brazing material (87).

The reservoir (95) is a recessed portion of the contact surface of at least one of the first protrusion (91) or the second protrusion (92), at a position apart from the refrigerant channel (31). In the example shown in FIG. 22, the contact surfaces of both the first protrusion (91) and the second protrusion (92) are recessed to form the reservoir (95).

### -Advantages of Ninth Embodiment-

According to this embodiment, the reservoir (95) is obtained by forming a recess in at least one of the contact surfaces of the first protrusion (91) or the second protrusion (92) at a position apart from the refrigerant channel (31).

### <<Other Embodiments»

It will be understood that the embodiments and variations described above can be modified with various changes in form and details without departing from the spirit and scope of the claims. The elements according to the embodiments, the variations thereof, and the other embodiments may be combined and replaced with each other. In addition, the expressions of "first," "second," "third," . . . , in the specification and claims are used to distinguish the terms to which these expressions are given, and do not limit the number and order of the terms.

### INDUSTRIAL APPLICABILITY

As can be seen from the foregoing description, the present disclosure is useful for a shell-and-plate heat exchanger and a refrigeration apparatus.

### DESCRIPTION OF REFERENCE CHARACTERS

- 1: Refrigeration Apparatus
- 1a: Refrigerant Circuit
- 10: Shell-and-Plate Heat Exchanger
- 11: Shell
- 15: Internal Space
- 30: Plate Stack
- 31: Refrigerant Channel
- 32: Heating Medium Channel
- 33: Heating Medium Introduction Path (First Channel)
- 34: Heating Medium Emission Path (Second Channel)
- 71: First Heat Transfer Plate
- 72: Second Heat Transfer Plate
- 73: Third Heat Transfer Plate
- 75: Partitioning Portion
- 81: First Surface
- 82: Second Surface
- 83: Third Surface
- 84: Fourth Surface
- 87: Brazing Material
- 91: First Protrusion
- 92: Second Protrusion
- 95: Reservoir

## Claims

1. A shell-and-plate heat exchanger comprising:
a shell (11) having an internal space (15); and
a plate stack (30) housed in the internal space (15) and including a first heat transfer plate (71), a second heat transfer plate (72), and a third heat transfer plate (73) which are stacked and joined together in a plate thickness direction,
the plate stack (30) including:
a refrigerant channel (31) which is provided between a first surface (81) of the first heat transfer plate (71) and a second surface (82) of the second heat transfer plate (72) and through which a refrigerant flows;
a heating medium channel (32) which is provided between a third surface (83) of the second heat transfer plate (72) and a fourth surface (84) of the third heat transfer plate (73) and through which a heating medium flows;
a first channel (33) extending in a stacking direction of the second heat transfer plate (72) and the third heat transfer plate (73) and communicating with the heating medium channel (32); and
a second channel (34) extending in the stacking direction and communicating with the heating medium channel (32),
the first surface (81) and the second surface (82) being joined to each other at a periphery of the first channel (33) and a periphery of the second channel (34),
the third surface (83) and the fourth surface (84) being joined to each other at a peripheral portion of the second heat transfer plate (72) and the third heat transfer plate (73) and at a partitioning portion (75) located between the first channel (33) and the second channel (34),
the second surface (82) including a rough surface that is rough.

2. The shell-and-plate heat exchanger of claim 1, wherein
the rough surface is provided in 80% or more of an area of the second surface (82).

3. The shell-and-plate heat exchanger of claim 1 or 2, wherein
the first surface (81) and the second surface (82) are joined together by brazing, and
the third surface (83) and the fourth surface (84) are joined together by brazing.

4. The shell-and-plate heat exchanger of claim 3, wherein
a reservoir (95) is provided between a brazed portion (85) at the periphery of the first channel (33), where the first surface (81) and the second surface (82) are brazed, and the refrigerant channel (31), the reservoir (95) being configured to store a brazing material (87).

5. The shell-and-plate heat exchanger of claim 4, wherein
the reservoir (95) is a recessed portion of at least one of the first surface (81) or the second surface (82), at a position apart from the refrigerant channel (31).

6. The shell-and-plate heat exchanger of claim 4, wherein
the reservoir (95) is a recessed portion of at least one of the first surface (81) or the second surface (82), the reservoir (95) being recessed like a step to open toward the refrigerant channel (31).

7. The shell-and-plate heat exchanger of any one of claims 4 to 6, wherein
the reservoir (95) extends along a circumferential direction of the first channel (33) over an entire perimeter.

8. The shell-and-plate heat exchanger of any one of claims 4 to 6, wherein
a plurality of reservoirs (95), each being identical to the reservoir (95), are spaced apart from one another in a circumferential direction of the first channel (33).

9. The shell-and-plate heat exchanger of any one of claims 4 to 8, wherein
the second surface (82) at the periphery of the first channel (33) is not provided with the rough surface.

10. The shell-and-plate heat exchanger of claim 1 or 2, wherein
the first surface (81) and the second surface (82) are joined together by welding, and
the third surface (83) and the fourth surface (84) are joined together by brazing.

11. The shell-and-plate heat exchanger of any one of claims 3 to 10, wherein
a peripheral portion of the first heat transfer plate (71) has a first protrusion (91) that bulges from the first surface (81) toward the refrigerant channel (31), and
the peripheral portion of the second heat transfer plate (72) has a second protrusion (92) that bulges from the second surface (82) toward the refrigerant channel (31), the second protrusion (92) being in contact with the first protrusion (91).

12. The shell-and-plate heat exchanger of claim 11, wherein
contact surfaces of the first protrusion (91) and the second protrusion (92) are joined together by brazing.

13. The shell-and-plate heat exchanger of claim 12, wherein
a reservoir (95) is provided between a brazed portion (85), where the first protrusion (91) and the second protrusion (92) are brazed together on the contact surfaces, and the refrigerant channel (31), the reservoir (95) being configured to store a brazing material (87).

14. The shell-and-plate heat exchanger of claim 13, wherein
the reservoir (95) is a recessed portion of the contact surface of at least one of the first protrusion (91) or the second protrusion (92), at a position apart from the refrigerant channel (31).

15. The shell-and-plate heat exchanger of claim 13, wherein
the reservoir (95) is a recessed portion of the contact surface of at least one of the first protrusion (91) or the second protrusion (92), the reservoir (95) being recessed like a step to open toward the refrigerant channel (31).

16. The shell-and-plate heat exchanger of claim 1 or 2, wherein
the first surface (81) and the second surface (82) are joined together by welding, and
the third surface (83) and the fourth surface (84) are joined together by welding.

17. The shell-and-plate heat exchanger of claim 16, wherein
the third surface (83) and the fourth surface (84) each have a flat peripheral portion.

18. A refrigeration apparatus comprising:
the shell-and-plate heat exchanger (10) of any one of claims 1 to 17; and
a refrigerant circuit (1a) through which a refrigerant having exchanged heat in the shell-and-plate heat exchanger (10) flows.
